# EUROPEAN PATENT APPLICATION

(11) **EP 4 024 368 A1**
(43) Date of publication of application: **06.07.2022**
(21) Application number: 20856000.3
(22) Date of filing: 28.07.2020
(51) Int. Cl.: G08G 5/00, B64C 13/20, B64D 45/00, B64F 1/20, B64F 1/36, G01C 21/20, G01S 19/14, G05D 1/10, H05B 41/34, H05B 47/00

(54) **DISTRIBUTION DEVICE, AIRCRAFT, FLIGHT SYSTEM, METHOD FOR THESE, AND NON-TRANSITORY COMPUTER READABLE MEDIUM**

(30) Priority: 30.08.2019 JP 2019158475
(71) Applicant: NEC Platforms, Ltd., Kanagawa 213-8511 (JP)
(72) Inventor: YOSHIDA Atsushi, Kawasaki-shi, Kanagawa 213-8511 (JP)
(74) Representative: Betten & Resch
(86) International application number: PCT/JP2020/028867
(87) International publication number: WO 2021/039245

(57) **Abstract**

A distribution device (10) is provided with an acquisition unit (11) which acquires position information of an obstacle, and a distribution unit (12) which wirelessly distributes, from the obstacle to an aircraft, obstacle information including the acquired position information of the obstacle and identification information of the obstacle. The distribution device (10) distributes the identification information of the obstacle along with the position information of the obstacle to the aircraft, and the aircraft interprets the position, etc., of the specific obstacle.

## Description

### Technical Field

The present invention relates to a distribution device, an aircraft, a flight system, a method for these, and a non-transitory computer-readable medium.

### Background Art

In recent years, attention has been paid to an aircraft capable of autonomous flight such as a drone, and research on the aircraft and provision of a service using the aircraft have been promoted. Since such an aircraft may fly even in an urban area and the like, it is desired to be able to fly safely in various environments.

For example, PTL 1 is known as a technique related to navigation based on a global positioning system (GPS) signal. PTL 2 is known as a technique related to an aviation obstacle light indicating presence of a building to an aircraft.

### Citation List

### Patent Literature

[PTL 1] Japanese Unexamined Patent Application Publication No.2003-057330
[PTL 2] Japanese Unexamined Patent Application Publication No. 2004-055460

### Summary of Invention

### Technical Problem

In the related technique as described in PTL 1, an aircraft or the like receives a radio wave from a GPS satellite and determines own position information, thereby enabling the aircraft or the like to navigate (fly) a desired route by using the position information, map information, and the like. However, when automatic navigation or nighttime navigation in an urban area and the like is performed, it is necessary to avoid collision by visually recognizing actual arrangement of a building and the like being an obstacle. Use of a high-precision map is also conceivable, but safe and accurate navigation is hindered when it is not possible to follow change in an urban area that changes from moment to moment. In other words, in the related technique, there is a problem that it is difficult to accurately interpret, from an aircraft, a position and the like of an obstacle such as a building.

In view of such a problem, an object of the present disclosure is to provide a distribution device, an aircraft, a flight system, a method for these, and a non-transitory computer-readable medium that are capable of accurately interpreting a position and the like of an obstacle from an aircraft.

### Solution to Problem

A distribution device according to the present disclosure includes an acquisition unit configured to acquire position information of an obstacle, and a distribution unit configured to wirelessly distribute, from the obstacle to an aircraft, obstacle information including the acquired position information of the obstacle and identification information of the obstacle.

An aircraft according to the present disclosure includes a reception unit configured to wirelessly receive obstacle information including position information of an obstacle and identification information of the obstacle from a distribution device of the obstacle, an interpretation unit configured to interpret a three-dimensional structure of the obstacle, based on the received obstacle information, and a determination unit configured to determine a flight route avoiding the obstacle, based on the interpreted three-dimensional structure of the obstacle.

A flight system according to the present disclosure is a flight system including a distribution device and an aircraft, wherein the distribution device includes an acquisition unit configured to acquire position information of an obstacle, and a distribution unit configured to wirelessly distribute, from the obstacle to an aircraft, obstacle information including the acquired position information of the obstacle and identification information of the obstacle, and the aircraft includes a reception unit configured to wirelessly receive the obstacle information from a distribution device of the obstacle, an interpretation unit configured to interpret a three-dimensional structure of the obstacle, based on the received obstacle information, and a determination unit configured to determine a flight route avoiding the obstacle, based on the interpreted three-dimensional structure of the obstacle.

A distribution method according to the present disclosure includes acquiring position information of an obstacle, and wirelessly distributing, from the obstacle to an airplane, obstacle information including the acquired position information of the obstacle and identification information of the obstacle.

A flight route determination method according to the present disclosure includes wirelessly receiving obstacle information including position information of an obstacle and identification information of the obstacle from a distribution device of the obstacle, interpreting a three-dimensional structure of the obstacle, based on the received obstacle information, and determining a flight route avoiding the obstacle, based on the interpreted three-dimensional structure of the obstacle.

A non-transitory computer-readable medium storing a distribution program according to the present disclosure is a non-transitory computer-readable medium storing a distribution program for causing a computer to execute processing of acquiring position information of an obstacle and wirelessly distributing, from the obstacle to an aircraft, obstacle information including the acquired position information of the obstacle and identification information of the obstacle.

A non-transitory computer-readable medium storing a flight route determination program according to the present disclosure is a non-transitory computer-readable medium storing a flight route determination program for causing a computer to execute processing of wirelessly receiving obstacle information including position information of an obstacle and identification information of the obstacle from a distribution device of the obstacle, interpreting a three-dimensional structure of the obstacle, based on the received obstacle information, and determining a flight route avoiding the obstacle, based on the interpreted three-dimensional structure of the obstacle.

### Advantageous Effects of Invention

According to the present disclosure, it is possible to provide a distribution device, an aircraft, a flight system, a method for these, and a non-transitory computer-readable medium that are capable of accurately interpreting a position and the like of an obstacle from an aircraft.

### Brief Description of the Drawings

Fig. 1 is a configuration diagram illustrating an outline of a distribution device according to an example embodiment.
Fig. 2 is a configuration diagram illustrating an outline of an aircraft according to the example embodiment.
Fig. 3 is a configuration diagram illustrating a configuration example of a flight system according to a first example embodiment.
Fig. 4 is a configuration diagram illustrating a configuration example of an aviation obstacle light according to the first example embodiment.
Fig. 5 is a configuration diagram illustrating a configuration example of a control device of the aviation obstacle light according to the first example embodiment.
Fig. 6 is a configuration diagram illustrating a configuration example of a drone according to the first example embodiment.
Fig. 7 is a sequence diagram illustrating an operation example of the flight system according to the first example embodiment.
Fig. 8 is an image diagram for describing the operation example of the flight system according to the first example embodiment.
Fig. 9 is a configuration diagram illustrating a configuration example of an aviation obstacle light according to a second example embodiment.
Fig. 10 is a configuration diagram illustrating a configuration example of a control device of the aviation obstacle light according to the second example embodiment.
Fig. 11 is a graph illustrating an example of light modulation of the aviation obstacle light according to the second example embodiment.
Fig. 12 is a sequence diagram illustrating an operation example of a flight system according to the second example embodiment.
Fig. 13 is a configuration diagram illustrating a configuration example of a control device of an aviation obstacle light according to a third example embodiment.
Fig. 14 is a sequence diagram illustrating an operation example of a flight system according to the third example embodiment.

### Description of Embodiments

Example embodiments will be described below with reference to the drawings. In the drawings, the same element is denoted by the same reference sign, and a repetitive description thereof is omitted as necessary.

### (Outline of Example Embodiment)

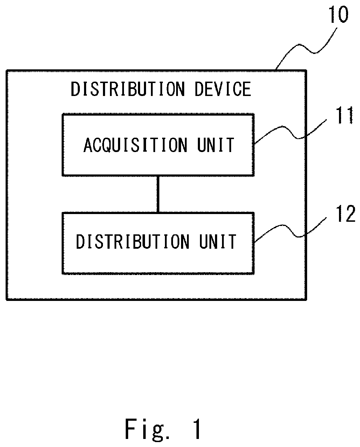

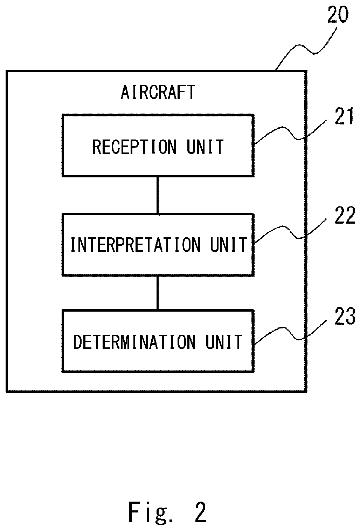

Fig. 1 illustrates an outline of a distribution device according to an example embodiment and Fig. 2 illustrates an outline of an aircraft according to the example embodiment. A distribution device 10 illustrated in Fig. 1 and an aircraft 20 illustrated in Fig. 2 constitute a flight system according to the example embodiment.

As illustrated in Fig. 1, the distribution device 10 includes an acquisition unit 11 and a distribution unit 12. For example, the distribution device 10 is fixed to an obstacle such as a building and the acquisition unit 11 acquires position information of the obstacle. The distribution unit 12 wirelessly distributes, from the obstacle to an aircraft, obstacle information including the position information of the obstacle acquired by the acquisition unit 11 and identification information of the obstacle.

As illustrated in Fig. 2, the aircraft 20 includes a reception unit 21, an interpretation unit 22, and a determination unit 23. The reception unit 21 wirelessly receives the obstacle information including the position information of the obstacle and the identification information of the obstacle from the distribution device 10 of the obstacle. The interpretation unit 22 interprets a three-dimensional structure of the obstacle based on the obstacle information received by the reception unit 21. The determination unit 23 determines a flight route avoiding the obstacle based on the three-dimensional structure of the obstacle interpreted by the interpretation unit 22.

As described above, according to the example embodiment, the distribution device distributes identification information of an obstacle to an aircraft together with position information of the obstacle, and the aircraft can accurately interpret a position and the like of the specific obstacle. In addition, by interpreting a three-dimensional structure of the obstacle based on the received information, the aircraft can avoid the obstacle and perform safe flight.

### (First Example Embodiment)

Hereinafter, a first example embodiment will be described.

First, in order to facilitate understanding of the first example embodiment, a related technique will be discussed. As described in PTL 1, GPS system technology based on satellites is utilized in order to determine a position on the ground. The GPS satellite is equipped with a high-precision clock, and can calculate position information by performing the principle of triangulation and correction based on an arrival time difference of radio waves from the GPS satellite. Further, as described in PTL 2, a product for synchronizing blinking of an aviation obstacle light installed on a building is provided by taking advantage of acquiring high-precision time information from a plurality of GPS satellites located above the sky. Meanwhile, in order to navigate a small aircraft such as a drone in a building street, it is necessary to navigate in a visual field. For this reason, it is necessary to recognize actual arrangement of buildings at the time of navigation to avoid collision for automatic navigation and nighttime navigation. A method of using a high-precision map is also conceivable, but safe and accurate navigation is hindered when it is not possible to follow change in an urban area that changes from moment to moment.

Therefore, according to the present example embodiment, by synchronizing the blinking of the aviation obstacle lights installed on the same building based on the time information acquired from the GPS satellites, and by transmitting, from each aviation obstacle light, accurate position information of each aviation obstacle light acquired from the GPS satellites, it is possible to recognize a size and a position of the building with respect to an aircraft navigating in the vicinity and secure the safety of navigation and an accurate route.

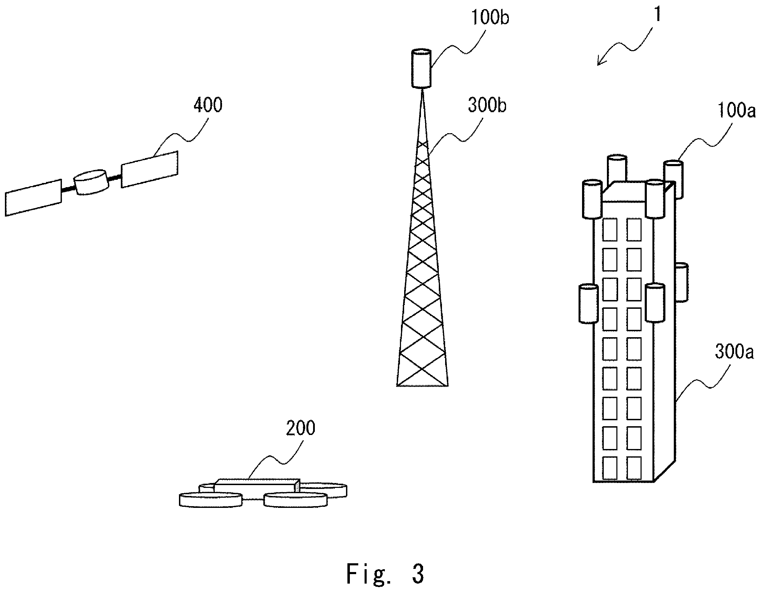

Fig. 3 illustrates a configuration of a flight system according to the present example embodiment. As illustrated in Fig. 3, a flight system 1 includes a plurality of aviation obstacle lights 100 and a drone 200.

The aviation obstacle light 100 is an electric light that is lit to indicate the presence of a structure (obstacle) such as a building or the like with respect to an aircraft that flies at night. The installation of the aviation obstacle light 100 is stipulated in Article 51 of the Civil Aeronautics Act (Japan), and the aviation obstacle light 100 is installed on a structure with a height equal to or more than 60 m from the ground surface or water surface, and the prescribed lighting is performed. The aviation obstacle light 100 is installed on broadcast towers, radio relay stations, transmission towers, suspension bridges, high-rise buildings in an urban area, chimneys, and the like. For example, the aviation obstacle light 100a is installed at four corners of a rooftop or at four corners at a height with a predetermined interval from the rooftop of a quadrangular prism-shaped structure 300a such as a building. The aviation obstacle light 100b is installed at the uppermost portion of a structure 300b in a shape of a quadrangular pyramid such as a radio wave tower.

The aviation obstacle light 100 receives a GPS signal by a radio wave from a GPS satellite 400, and acquires accurate time information and position information based on the received GPS signal. The aviation obstacle light 100 blinks in synchronization with each structure 300 based on the acquired time information. In addition, in order to indicate the information of the aviation obstacle light on the same structure, the aviation obstacle light 100 adds identification information (ID, etc.) unique to the same structure to the acquired position information of the structure 300, and transmits the acquired position information. All of the aviation obstacle lights 100 of the structure 300 wirelessly transmit the acquired position information to the drone 200. The wireless transmission method is not particularly limited, but according to the present example embodiment, transmission is performed by a radio wave. By transmitting by a radio wave, position information of a place that cannot be visually recognized can be transmitted to the drone 200.

The drone 200 is an unmanned aircraft capable of autonomous flight. The drone 200 may also be an airborne vehicle or a common aircraft. The drone 200 receives the GPS signal by the radio wave from the GPS satellite 400, acquires position information based on the received GPS signal, and performs automatic control in such a way as to navigate a flight route based on the acquired position information, information of various sensors, and the like. In addition, the drone 200 receives the position information of the structure 300 and the identification information of the structure 300 from the aviation obstacle light 100, and calculates a size and a position of the structure 300 associated with the identification information, thereby identifying an outer shape and the position of the structure 300, avoiding the structure 300 being an obstacle, and flies for seeking a route farther away from the obstacle.

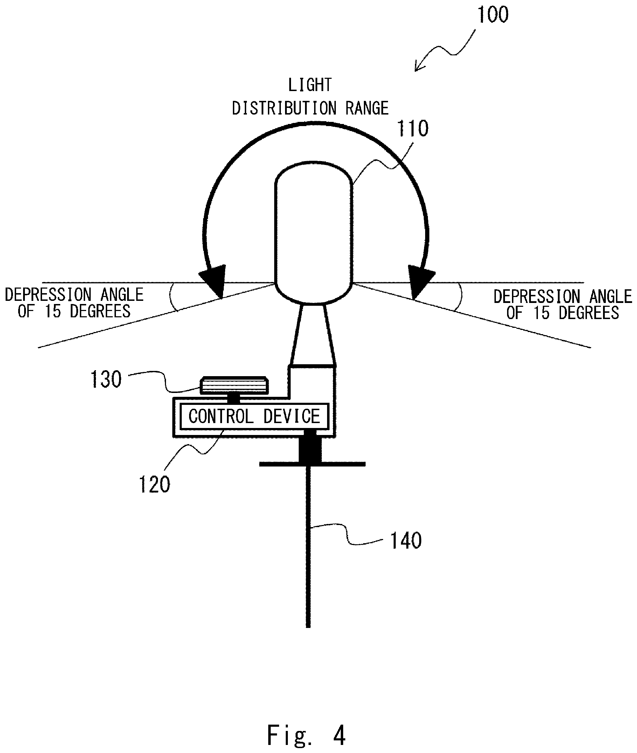

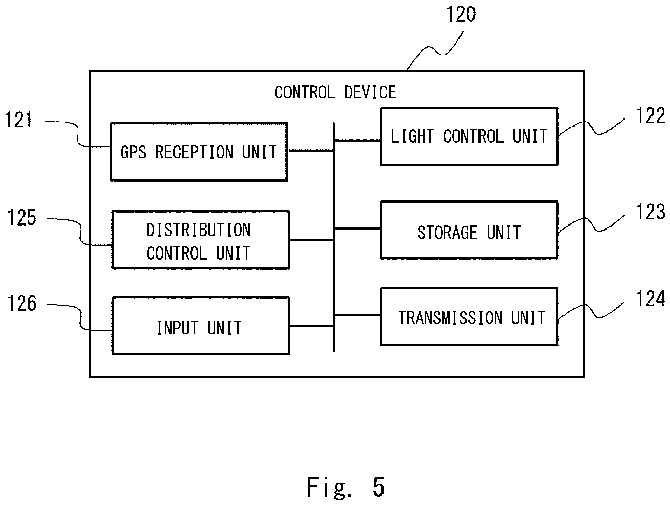

Figs. 4 and 5 illustrate a configuration example of the aviation obstacle light according to the present example embodiment. As illustrated in Fig. 4, the aviation obstacle light 100 includes a light source 110, a control device 120, a GPS antenna 130, and a radio antenna 140.

The light source 110 is a light source that lights in red or white, and is, for example, a light emitting diode (LED), a neon lamp, an incandescent lamp, or the like. The light source 110 lights in response to control by the control device 120, and emits above the depression angle of 15 degrees as a light distribution range. In other word, the light to be lit emits red or white light in all directions upward from the depression angle of 15 degrees. The GPS antenna 130 is an antenna that receives a GPS signal from the GPS satellite 400.

The radio antenna 140 is an antenna for transmitting and receiving radio waves to and from the drone 200 and the like. It is preferable to incorporate the radio antenna 140 in such a way as not to interfere with a requirement for the aviation obstacle light as lighting equipment stipulated in Article 51 of the Civil Aeronautics Act. For example, the radio antenna 140 is installed at a position having a depression angle of 15 degrees or less in such a way as to avoid all directions above the depression angle of 15 degrees at which the aviation obstacle light 100 emits light. The radio antenna 140 is, for example, a nondirectional antenna such as a discone antenna.

The control device 120 is a control device for controlling operation of the aviation obstacle light 100. For example, as illustrated in Fig. 5, the control device 120 includes a GPS reception unit 121, a light control unit 122, a storage unit 123, a transmission unit 124, a distribution control unit 125, and an input unit 126. Note that a configuration of each unit (block) is an example, and other units may be configured as long as the operation of the aviation obstacle light 100 according to the present example embodiment is possible. For example, the light control unit 122 and the distribution control unit 125 may be a single control unit, or a part or all of the storage unit 123, the transmission unit 124, and the GPS reception unit 121 may be external devices.

The GPS reception unit 121 is a time acquisition unit that receives a GPS signal from the GPS satellite 400 via the GPS antenna 130 and acquires a current time based on the received GPS signal, and is a position acquisition unit that acquires a position (latitude, longitude, and altitude) of the aviation obstacle light 100 (structure 300) based on the received GPS signal.

The storage unit 123 is a memory for storing a program and data necessary for the operation of the control device 120. The storage unit 123 stores identification information for identifying the structure 300, a lighting time, a blinking interval, and the like at the structure 300. For example, the identification information and the like of the structure 300 are preset and stored in the storage unit 123. The identification information of the structure 300 is an identifier capable of identifying the structure 300, and may include the type (building, tower, or the like) of the structure 300.

The transmission unit 124 is a radio transmission unit that wirelessly transmits (wirelessly distributes) predetermined information to the drone 200 or the like via the radio antenna 140. For example, the transmission unit 124 performs wireless transmission by a wireless LAN, short-range wireless communication, or the like.

The light control unit 122 and the distribution control unit 125 are control units that execute a main operation of the control device 120. For example, a function of the light control unit 122 and the distribution control unit 125 is achieved by causing a processor such as a central processing unit (CPU) to execute a program stored in the storage unit 123.

The light control unit 122 controls the light (light emission) of the light source 110. The light control unit 122 controls in such a way as to light at a predetermined time, (for example, at night), and to blink at a predetermined interval according to the lighting time and the blinking interval stored in the storage unit 123. The light control unit 122 blinks at a timing based on the time acquired by the GPS reception unit 121, thereby blinking in synchronization with other aviation obstacle lights 100 installed on the same structure 300.

The distribution control unit 125 controls distribution to the drone 200 by the transmission unit 124. The distribution control unit 125 generates structure information including the position information acquired by the GPS reception unit 121 and the identification information of the structure 300 stored in the storage unit 123, and controls the transmission unit 124 to transmit the generated structure information to the drone 200. For example, the distribution control unit 125 periodically distributes the structure information. The distributed structure information can be received by any drone 200 flying around the structure 300 capable of wireless communication.

The input unit 126 inputs information necessary for distribution by the distribution control unit 125. When the aviation obstacle light 100 is used in a place where a reception environment of a radio wave from the GPS satellite 400 is not good or under a condition where a radio wave is interfered, there is a possibility that coordinate information based on the information acquired from the GPS satellite 400 may fluctuate. In order to avoid the above, coordinate data of the aviation obstacle light 100 that is fixed and not moved may be input from the input unit 126, and this "fixed value of coordinates" may be used as the coordinate data. In other words, the input unit 126 can input the "fixed value of coordinates" as the position information included in the information distributed from the distribution control unit 125, and can also input the "identification information" of the structure 300. In an environment with good reception condition of the radio wave from the GPS satellite 400, it is desirable to use information based on received data from the GPS satellite 400 in order to avoid human error.

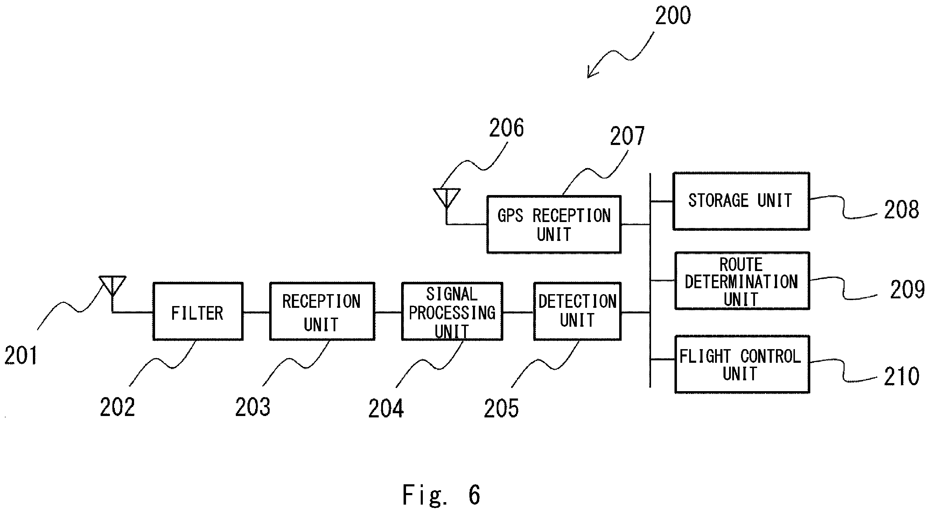

Fig. 6 illustrates a configuration example of a drone according to the present example embodiment. As illustrated in Fig. 6, the drone 200 includes a radio antenna 201, a filter 202, a reception unit 203, a signal processing unit 204, a detection unit 205, a GPS antenna 206, a GPS reception unit 207, a storage unit 208, a route determination unit 209, and a flight control unit 210. Note that a configuration of each unit (block) is an example, and other units may be configured as long as operation of the drone 200 according to the present example embodiment is possible. For example, the filter 202, the reception unit 203, the signal processing unit 204, and the detection unit 205 may be a single reception unit, the route determination unit 209 and the flight control unit 210 may be a single control unit, or a part or all of the GPS reception unit 207 and the storage unit 208 may be external devices.

The radio antenna 201 is an antenna for receiving a radio wave from the aviation obstacle light 100. The filter 202 is a filter for removing noise of the radio wave received via the radio antenna 201, and is, for example, a low-pass filter. The reception unit 203 is a radio reception unit that wirelessly receives predetermined information from the aviation obstacle light 100 via the radio antenna 201. For example, similarly to the transmission unit 124 of the aviation obstacle light 100, the reception unit 203 performs wireless reception by a wireless LAN or short-range wireless communication.

The signal processing unit 204 performs necessary signal processing for a radio signal received by the reception unit 203. For example, when the signal processing unit 204 receives the structure information from the aviation obstacle light 100, the signal processing unit 204 separates the position information of the structure 300 (the aviation obstacle light 100) included in the structure information from the identification information of the structure 300.

The detection unit 205 detects the structure 300 based on the information received by the reception unit 203. The detection unit 205 detects a position of the structure 300 on which the aviation obstacle light 100 is installed, based on the position information of the structure 300 (the aviation obstacle light 100) acquired by the signal processing unit 204 and the identification information of the structure 300.

The GPS antenna 206 is an antenna that receives a GPS signal from the GPS satellite 400. The GPS reception unit 207 is a position acquisition unit that receives the GPS signal from the GPS satellite 400 via the GPS antenna 206, and acquires a position (latitude, longitude, and altitude) of the drone 200 based on the received GPS signal.

The storage unit 208 is a memory for storing a program and data necessary for operation of the drone 200. The storage unit 208 stores information on a destination, map information, information necessary for determining a route, and the like.

The route determination unit 209 and the flight control unit 210 are control units that control each unit of the drone 200. For example, a function of the route determination unit 209 and the flight control unit 210 is achieved by causing a processor such as a CPU to execute a program stored in the storage unit 208.

The route determination unit 209 refers to the map information stored in the storage unit 208, and determines a route (flight route) of the drone 200 for flying to a destination stored in the storage unit 208 from current position information acquired by the GPS reception unit 207. The route determination unit 209 determines a size, a position, and a three-dimensional structure of the structure 300 on which the aviation obstacle light 100 is installed, from the position information (coordinates) of the structure 300 (the aviation obstacle light 100) detected by the detection unit 205. The route determination unit 209 includes an interpretation unit that interprets the three-dimensional structure of the structure 300. The route determination unit 209 determines a route for avoiding the structure 300 based on the three-dimensional structure of the structure 300.

The flight control unit 210 controls flight operation of the drone 200 in such a way as to fly the route determined by the route determination unit 209. For example, the drone 200 is a multicopter having a plurality of rotors (propellers), and has a plurality of motors for rotating the plurality of rotors. The flight control unit 210 controls the rotation of the plurality of motors, and thus controls a flight altitude, direction, and direction of travel of the drone 200, thereby causing the drone 200 to fly along the route.

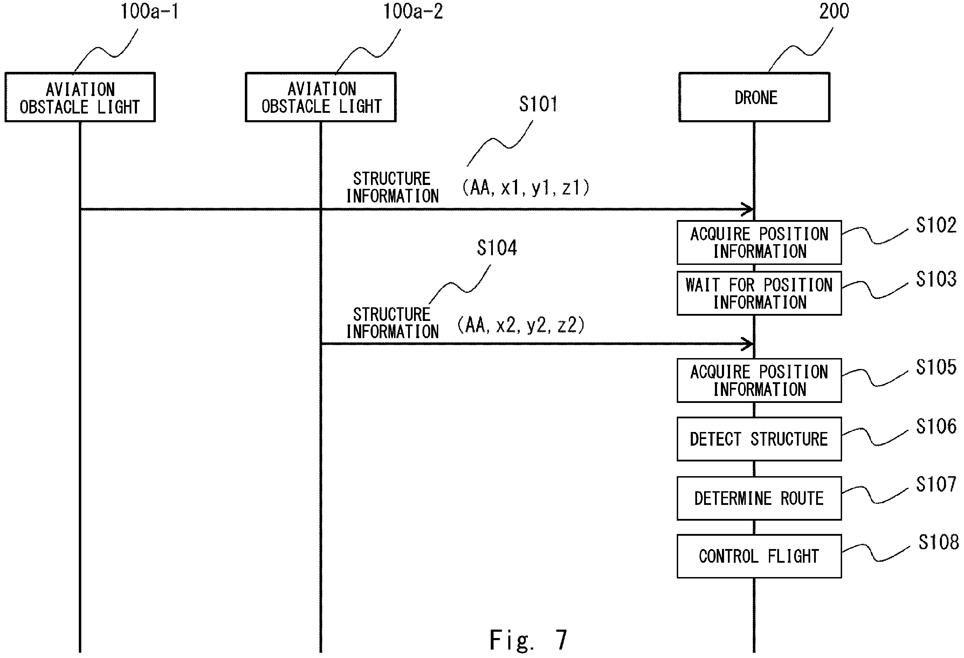

Fig. 7 illustrates an operation example of the flight system according to the present example embodiment. Fig. 7 is an example of a case where aviation obstacle lights 100a-1 and 100a-2 are installed on the structure 300a. It is assumed that identification information of the structure 300a is (AA), position information (latitude, longitude, and altitude) of the aviation obstacle light 100a-1 is (x1, y1, z1), and position information (latitude, longitude, and altitude) of the aviation obstacle light 100a-2 is (x2, y2, z2).

As illustrated in Fig. 7, the aviation obstacle lights 100a-1 and 100a-2 periodically distribute structure information to the surroundings. For example, the aviation obstacle light 100a-1 distributes the structure information including the identification information (AA) of the structure 300a and the position information (x1, y1, z1) of the aviation obstacle light 100a-1 to the drone 200 (S101).

When approaching the structure 300a, the drone 200 receives the structure information from the aviation obstacle light 100a-1, and acquires the identification information of the structure 300a and the position information of the aviation obstacle light 100a-1 from the received structure information (S102). In this example, the position information is waited for a predetermined time in order to acquire the position information from all the aviation obstacle lights installed on the same structure (S103). Incidentally, the number of aviation obstacle lights on the same structure may be included in the structure information to be distributed, and waiting may be performed until that number of pieces of position information are acquired. In addition, the number of aviation obstacle lights may be interpreted from the identification information (type, etc.) of the structure.

Further, the aviation obstacle light 100a-2 distributes the structure information including the identification information (AA) of the structure 300a and the position information (x2, y2, z2) of the aviation obstacle light 100a-2 to the drone 200 (S104). The drone 200 receives the structure information from the aviation obstacle light 100a-2, and acquires the identification information of the structure 300a and the position information of the aviation obstacle light 100a-2 from the received structure information (S105).

For example, when a predetermined period of time has elapsed since the first reception of the structure information, the drone 200 determines that all the position information of the aviation obstacle lights on the same structure has been acquired, and detects the position and the three-dimensional structure of the structure 300a (S106). From the acquired identification information (AA) and position information (x 1, y 1, z 1) and the identification information (AA) and position information (x 2, y 2, z 2), a three-dimensional structure of the structure of the identification information (AA) is generated as a three-dimensional model having walls of coordinates (x 1, y 1, z 1) and (x 2, y 2, z 2).

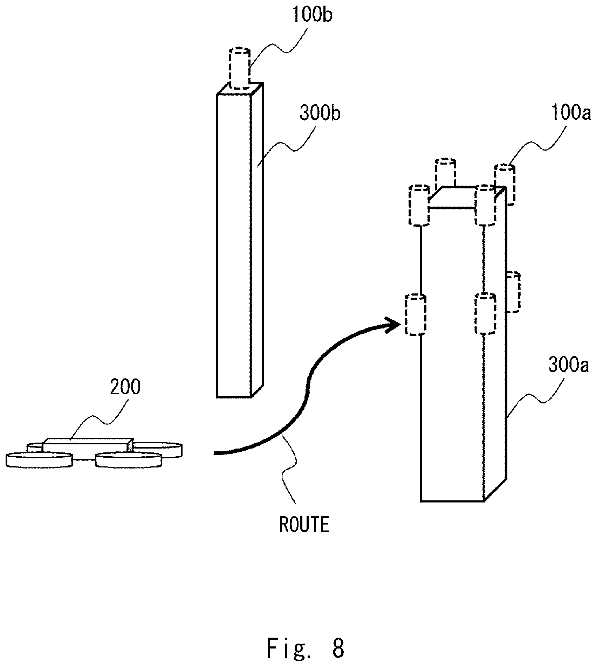

Next, the drone 200 determines a route for avoiding the structure 300a based on the detected position and the three-dimensional structure of the structure 300a (S107). For example, as illustrated in Fig. 8, the three-dimensional model of the structure 300a is generated from position information of a plurality of aviation obstacle lights 100a. For example, a three-dimensional model of a quadrangular prism having four walls is generated from position information of four aviation obstacle lights of the same height. The highest position of the plurality of pieces of position information is the height of the structure. In addition, a three-dimensional model of the structure 300b is generated from position information of the aviation obstacle light 100b. Any three-dimensional model may be generated from the position information of one aviation obstacle light. In this example, a three-dimensional model of a quadrangular prism having four walls is generated from the position information of one aviation obstacle light. The shape of the three-dimensional model may be interpreted from the identification information (type, etc.) of the structure. In a case of one piece of position information, the position is the height of the structure. In this example, the route is determined in such a way as not to overlap the three-dimensional model of the structure 300a and the three-dimensional model of the structure 300b in the three-dimensional space. The route may be between the structures 300a and 300b, or may be above the structures 300a and 300b. Thereafter, the drone 200 performs flight control in such a way as to fly the determined route (S108).

As described above, according to the present example embodiment, in a product in which a blinking cycle of an aviation obstacle light installed on one high-rise structure such as a high-rise building is synchronized by a signal from a GPS satellite, position information of each aviation obstacle light to be calculated by the signal from the GPS satellite acquired at the time of synchronization is transmitted together with identification information of the structure from all the aviation obstacle lights installed on the same structure, and thus the size and arrangement of the structure necessary for navigation can be recognized by an aircraft navigating in the vicinity, and safety of navigation and selection of a route can be achieved.

According to the present example embodiment, by transmitting identification information of a structure and position information of the structure from an aviation obstacle light, even when a high-rise building has just been completed and the high-rise building is not listed on a map, an aircraft navigating in the vicinity can recognize an obstacle in real time by calculating a size and a position of the building, and can interpret a distance between the obstacles, and thus it is possible to safely navigate without colliding with the obstacles.

### (Second Example Embodiment)

Next, a second example embodiment will be described. The second example embodiment is an example in which structure information is transmitted not by a radio wave but by being multiplexed into light of an aviation obstacle light in the configuration of the first example embodiment. Otherwise, the configuration is the same as that of the first example embodiment. Note that the first example embodiment and the second example embodiment may be combined and the structure information may be transmitted by a radio wave and by the light from the aviation obstacle light. For example, the structure information may be multiplexed into the light and transmitted at night when the aviation obstacle light is lit, and the structure information may be transmitted by a radio wave at daytime when the aviation obstacle light is not lit.

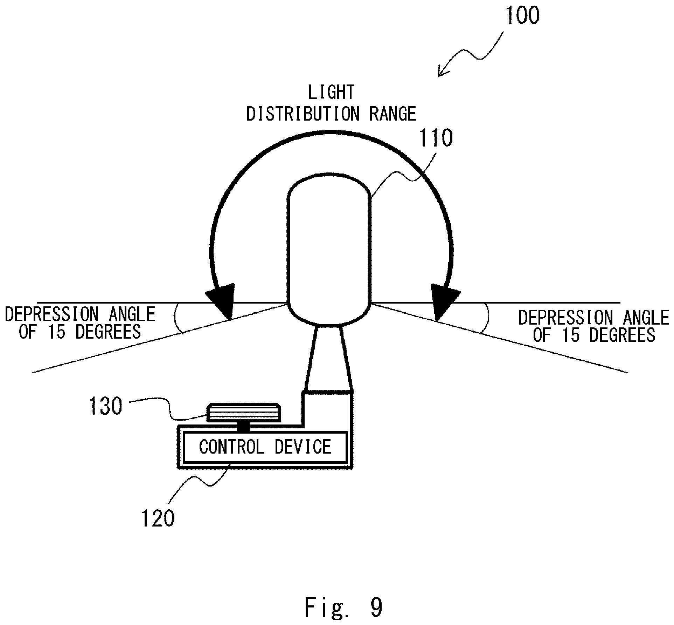

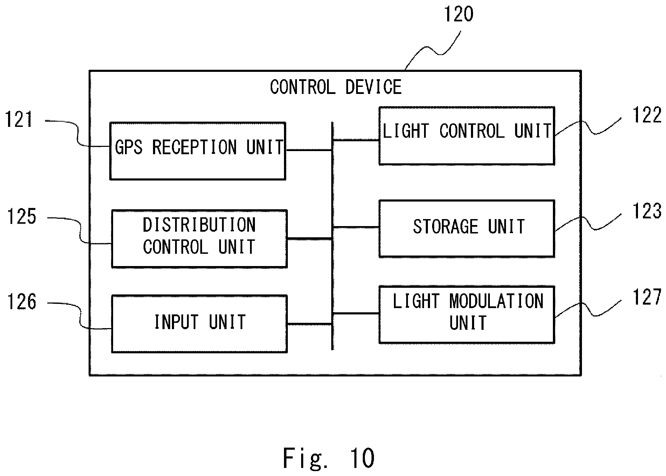

Figs. 9 and 10 illustrate a configuration example of the aviation obstacle light according to the present example embodiment. As illustrated in Fig. 9, an aviation obstacle light 100 includes a light source 110, a control device 120, and a GPS antenna 130 similarly to the first example embodiment, and does not include a radio antenna 140 according to the first example embodiment. According to the present example embodiment, for example, in a case where the light source of the aviation obstacle light is an LED, structure information including position information is multiplexed by modulation of light when the LED is emitted, and transmitted.

As illustrated in Fig. 10, the control device 120 includes a GPS reception unit 121, a light control unit 122, a storage unit 123, a distribution control unit 125, and an input unit 126 similarly to the first example embodiment, and includes a light modulation unit 127 in place of the transmission unit 124 according to the first example embodiment.

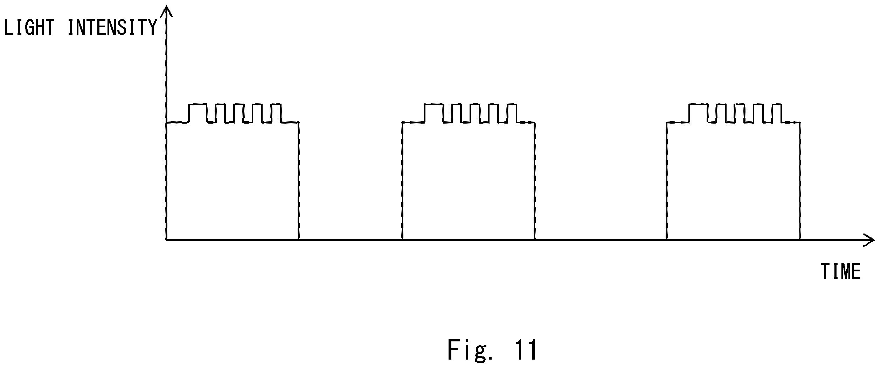

In addition to control of the light of the light source 110 by the light control unit 122, the light modulation unit 127 modulates the light of the light source 110 in order to superimpose predetermined information and transmit to a drone 200 or the like. In other words, when the structure information is transmitted in accordance with an instruction from the distribution control unit 125, the light modulation unit 127 multiplexes the structure information to be transmitted into the light of the light source 110. For example, as illustrated in Fig. 11, by changing intensity of the light from the light source 110 according to the structure information, the structure information is transmitted together with the light. Note that the present invention is not limited to intensity modulation of light, and wavelength modulation, phase modulation, or the like may be performed.

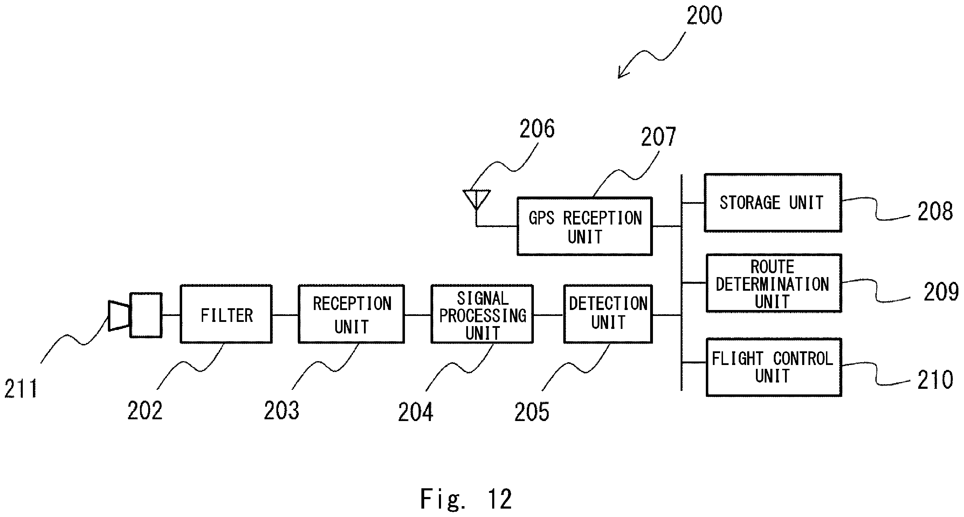

Fig. 12 illustrates a configuration example of a drone according to the present example embodiment. As illustrated in Fig. 12, the drone 200 includes a filter 202, a reception unit 203, a signal processing unit 204, a detection unit 205, a GPS antenna 206, a GPS reception unit 207, a storage unit 208, a route determination unit 209, and a flight control unit 210 similarly to the first example embodiment, and includes a camera 211 in place of the radio antenna 201 of the first example embodiment.

The camera 211 is an image capturing unit that captures an image including light from the aviation obstacle light 100, and in particular, is a light detection unit that detects the light from the aviation obstacle light 100. As long as the light of the aviation obstacle light can be detected, not only the camera but also a photodiode or the like may be used. The filter 202 removes noise of an image captured by the camera 211 or an optical signal, and the reception unit 203 receives the structure information from the aviation obstacle light 100 by demodulating modulated light. The reception and subsequent steps of the structure information are the same as the steps according to the first example embodiment.

According to the present example embodiment, by using a period of lighting of an aviation obstacle light, position information of the aviation obstacle light and identification information of the same structure are added, and light modulation is performed and the modulated light is transmitted from all the aviation obstacle lights. Modulating the light of the aviation obstacle light and multiplexing and transmitting the position information and the like eliminate a radio antenna and the like, and therefore, installation of the aviation obstacle light is possible without changing an outer shape of the aviation obstacle light.

### (Third Example Embodiment)

Next, a third example embodiment will be described. The third example embodiment is an example in which position information of a plurality of aviation obstacle lights on the same structure is collectively transmitted from each aviation obstacle light in the configuration of the first example embodiment. Otherwise, the configuration is the same as that of the first example embodiment. Similarly, position information of a plurality of aviation obstacle lights may be transmitted collectively according to the second example embodiment.

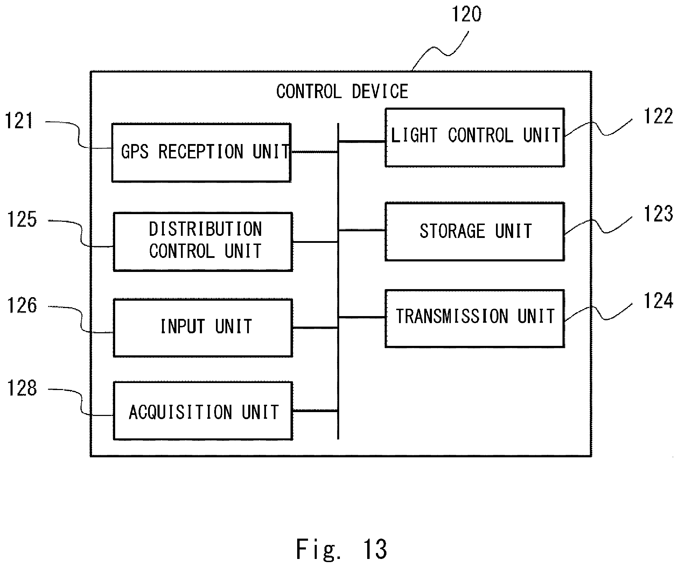

Fig. 13 illustrates an example of a configuration of a control device for the aviation obstacle light according to the present example embodiment. As illustrated in Fig. 13, a control device 120 includes a GPS reception unit 121, a light control unit 122, a storage unit 123, a transmission unit 124, a distribution control unit 125, and an input unit 126 similarly to the first example embodiment, and further includes an acquisition unit 128.

The acquisition unit 128 acquires position information of another aviation obstacle light 100 on the same structure 300. The acquisition unit 128 may acquire the position information from the another aviation obstacle lights 100 via wireless or priority communication, or may acquire the position information of the another aviation obstacle lights 100 via a management device such as a server. A LAN or wireless communication is used for communication for sharing each position information among all the aviation obstacle lights 100 installed on the same structure. The distribution control unit 125 distributes the position information of all the aviation obstacle lights 100 of the same structure 300 including the acquired position information of the another aviation obstacle lights 100 and identification information of the structure 300.

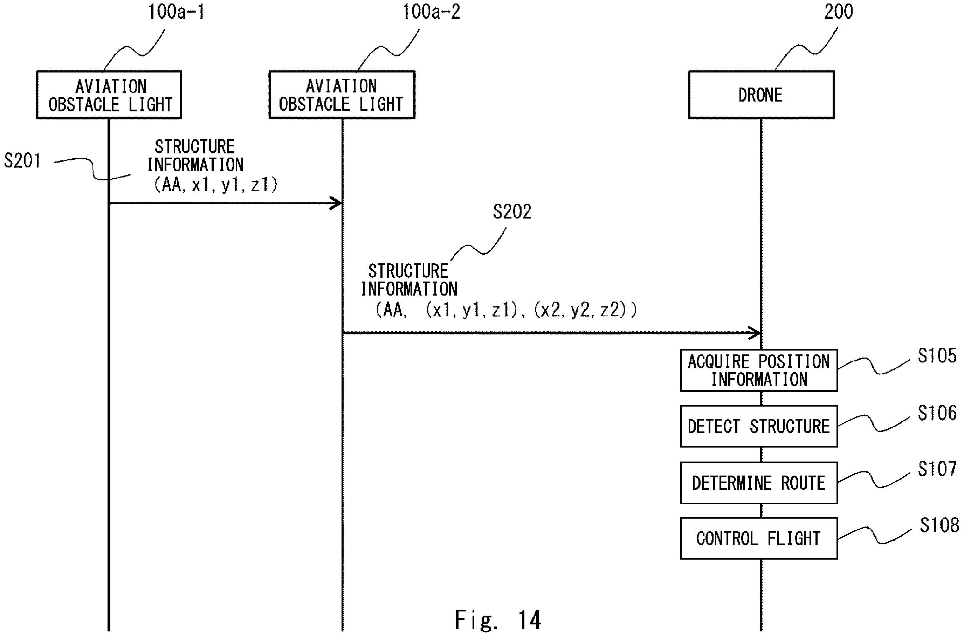

Fig. 14 illustrates an operation example of a flight system according to the present example embodiment. Fig. 14 is an example of a case where aviation obstacle lights 100a-1 and 100a-2 are installed on a structure 300a similarly to Fig. 7 according to the first example embodiment.

The aviation obstacle light 100a-1 transmits structure information including identification information (AA) of the structure 300a and position information (x1, y1, z1) of the aviation obstacle light 100a-1 (S201), and the aviation obstacle light 100a-2 acquires the information. Similarly, the aviation obstacle light 100a-2 transmits structure information including the identification information of the structure 300a and position information of the aviation obstacle light 100a-2 to the aviation obstacle light 100a-1. Further, the aviation obstacle light 100a-2 distributes, to the drone 200, structure information including the position information (x 1, y 1, z 1) of the aviation obstacle light 100a-1 in addition to the identification information (AA) of the structure 300a and the position information (x 2, y 2, z 2) of the aviation obstacle light 100a-2 (S202). Note that the aviation obstacle light 100a-1 also distributes the same information.

When the drone 200 receives the structure information from the aviation obstacle light 100a-2 (S105), the drone 200 detects a position and a three-dimensional structure of the structure 300a from the identification information of the structure 300a and the pieces of position information of the aviation obstacle light 100a-1 and the aviation obstacle light 100a-2 included in the received structure information (S106). Since the structure information includes the position information of all the aviation obstacle lights of the same structure, processing can be advanced without waiting for information from other aviation obstacle lights. Since all the aviation obstacle lights on the same structure mutually retain and transmit coordinate information of all the other aviation obstacle lights on the same structure, even though there is a problem in radio wave propagation between the aviation obstacle lights and the drone due to building shadow or disturbance factors of radio wave propagation, the three-dimensional structure of the structure can be detected as long as the drone can receive the information from only one of the aviation obstacle lights of the same structure. The subsequent operations are the same as the operations according to the first example embodiment.

As described above, according to the present example embodiment, position information of each of aviation obstacle lights is shared by all of the aviation obstacle lights on the same structure. In order to indicate that the position information of all the shared aviation obstacle lights is the information of the aviation obstacle lights on the same structure, identification information of the same structure is added and transmitted from all the aviation obstacle lights. By receiving information from one aviation obstacle light, a position and the like of the structure can be interpreted, and therefore, the structure can be detected and a route can be determined quickly.

Note that the present disclosure is not limited to the above-mentioned example embodiments, and can be modified as appropriate without departing from the gist. For example, although an example of an aviation obstacle light has been mainly described according to the above example embodiments, the present invention is not limited to the aviation obstacle light, and any distribution device capable of distributing information to an aircraft may be used. In addition, although an example of a structure has been described as an obstacle to be provided with such a distribution device, the present invention is not limited to the structure, and other obstacles may be used. The obstacle may be a "moving body" such as an "aircraft". For example, information to be transmitted by the "aircraft" may be mutually transmitted by aircrafts as information of "identification information" and coordinates (the center position at that moment of an aircraft acquired by a GPS reception and the radius of the sphere in a case of assuming a virtual sphere covering the aircraft), and the aircrafts may determine collision avoidance or a flight route for collision avoidance.

Each configuration according to the above-described example embodiments is configured by hardware, software, or both, and may be configured by one hardware or software, or may be configured by a plurality of hardware or software. The functions (processing) of each device may be achieved by a computer having a CPU, a memory, or the like. For example, a program for performing the method (distribution method or flight route determination method) according to the example embodiments may be stored in the storage device, and each function may be achieved by causing a CPU to execute the program stored in the storage device.

These programs can be stored and supplied to a computer using various types of non-transitory computer-readable medium. The non-transitory computer-readable medium includes various types of tangible storage medium. Examples of the non-transitory computer-readable medium include a magnetic recording medium (e.g., flexible disk, magnetic tape, hard disk drive), a magneto-optical recording medium (e.g., magneto-optical disk), a CD-read only memory (ROM), a CD-R, a CD-R/W, a semiconductor memory (e.g., mask ROM, programmable ROM (PROM), erasable PROM (EPROM), flash ROM, random access memory (RAM)). The program may also be supplied to a computer by various types of transitory computer-readable medium. Examples of the transitory computer-readable medium include an electrical signal, an optical signal, and an electromagnetic wave. The transitory computer-readable medium can provide the program to a computer via a wired or wireless communication path such as an electrical wire and an optical fiber.

Some or all of the above example embodiments may also be described as the following supplementary notes, but are not limited to the following.

### (Supplementary note 1)

A distribution device comprising:
acquisition means for acquiring position information of an obstacle; and
distribution means for wirelessly distributing, from the obstacle to an aircraft, obstacle information including the acquired position information of the obstacle and identification information of the obstacle.

### (Supplementary note 2)

The distribution device according to Supplementary note 1, wherein the distribution means distributes the obstacle information by a radio wave.

### (Supplementary note 3)

The distribution device according to Supplementary note 1, further comprising light emitting means for emitting light to the aircraft,
wherein the distribution means distributes the obstacle information by multiplexing the obstacle information into the light.

### (Supplementary note 4)

The distribution device according to Supplementary note 3, wherein the distribution device is an aviation obstacle light installed on the obstacle.

### (Supplementary note 5)

The distribution device according to Supplementary note 4, wherein the acquisition means acquires time information for time synchronization of the aviation obstacle light.

### (Supplementary note 6)

The distribution device according to any one of Supplementary notes 1 to 5, wherein the position information of the obstacle includes position information in a plurality of distribution devices arranged on the obstacle.

### (Supplementary note 7)

An aircraft comprising:
reception means for wirelessly receiving obstacle information including position information of an obstacle and identification information of the obstacle from a distribution device of the obstacle;
interpretation means for interpreting a three-dimensional structure of the obstacle, based on the received obstacle information; and
determination means for determining a flight route avoiding the obstacle, based on the interpreted three-dimensional structure of the obstacle.

### (Supplementary note 8)

The aircraft according to Supplementary note 7, wherein the distribution device is an aviation obstacle light installed on the obstacle.

### (Supplementary note 9)

A flight system comprising:
a distribution device; and
an aircraft, wherein
the distribution device includes:
   acquisition means for acquiring position information of an obstacle; and
   distribution means for wirelessly distributing, from the obstacle to an aircraft, obstacle information including the acquired position information of the obstacle and identification information of the obstacle, and
the aircraft includes:
   reception means for wirelessly receiving the obstacle information from the distribution device of the obstacle;
   interpretation means for interpreting a three-dimensional structure of the obstacle, based on the received obstacle information; and
   determination means for determining a flight route avoiding the obstacle, based on the interpreted three-dimensional structure of the obstacle.

### (Supplementary note 10)

The flight system according to Supplementary note 9, wherein the distribution device is an aviation obstacle light installed on the obstacle.

### (Supplementary note 11)

A distribution method comprising:
acquiring position information of an obstacle; and
wirelessly distributing, from the obstacle to an aircraft, obstacle information including the acquired position information of the obstacle and identification information of the obstacle.

### (Supplementary note 12)

The distribution method according to Supplementary note 11, wherein the distribution is performed from an aviation obstacle light installed on the obstacle.

### (Supplementary note 13)

A flight route determination method comprising:
wirelessly receiving obstacle information including position information of an obstacle and identification information of the obstacle from a distribution device of the obstacle;
interpreting a three-dimensional structure of the obstacle, based on the received obstacle information; and
determining a flight route avoiding the obstacle, based on the interpreted three-dimensional structure of the obstacle.

### (Supplementary note 14)

The flight route determination method according to Supplementary note 13, wherein the distribution device is an aviation obstacle light installed on the obstacle.

### (Supplementary note 15)

A distribution program for causing a computer to execute processing of:
acquiring position information of an obstacle; and
wirelessly distributing, from the obstacle to an aircraft, obstacle information including the acquired position information of the obstacle and identification information of the obstacle.

### (Supplementary note 16)

The distribution program according to Supplementary note 15, wherein the distribution is performed from an aviation obstacle light installed on the obstacle.

### (Supplementary note 17)

A flight route determination program for causing a computer to execute processing of:
wirelessly receiving obstacle information including position information of an obstacle and identification information of the obstacle from a distribution device of the obstacle;
interpreting a three-dimensional structure of the obstacle, based on the received obstacle information; and
determining a flight route avoiding the obstacle, based on the interpreted three-dimensional structure of the obstacle.

### (Supplementary note 18)

The flight route determination program according to Supplementary note 17, wherein the distribution device is an aviation obstacle light installed on the obstacle.

While the invention has been particularly shown and described with reference to example embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2019-158475, filed on August 30, 2019, the disclosure of which is incorporated herein in its entirety by reference.

### Reference Signs List

- 1: Flight System
- 10: Distribution device
- 11: Acquisition unit
- 12: Distribution unit
- 20: Aircraft
- 21: Reception unit
- 22: Interpretation unit
- 23: Determination unit
- 100, 100a, 100b: Aviation obstacle light
- 110: Light source
- 120: Control device
- 121: GPS reception unit
- 122: Light control unit
- 123: Storage unit
- 124: Transmission unit
- 125: Distribution control unit
- 126: Input unit
- 127: Light modulation unit
- 128: Acquisition unit
- 130: GPS antenna
- 140: Radio antenna
- 200: Drone
- 201: Radio antenna
- 202: Filter
- 203: Reception unit
- 204: Signal processing unit
- 205: Detection unit
- 206: GPS antenna
- 207: GPS reception unit
- 208: Storage unit
- 209: Route determination unit
- 210: Flight control unit
- 211: Camera
- 300, 300a, 300b: Structure
- 400: GPS satellite

## Claims

1. A distribution device comprising:
acquisition means for acquiring position information of an obstacle; and
distribution means for wirelessly distributing, from the obstacle to an aircraft, obstacle information including the acquired position information of the obstacle and identification information of the obstacle.

2. The distribution device according to Claim 1, wherein the distribution means distributes the obstacle information by a radio wave.

3. The distribution device according to Claim 1, further comprising light emitting means for emitting light to the aircraft,
wherein the distribution means distributes the obstacle information by multiplexing the obstacle information into the light.

4. The distribution device according to Claim 3, wherein the distribution device is an aviation obstacle light installed on the obstacle.

5. The distribution device according to Claim 4, wherein the acquisition means acquires time information for time synchronization of the aviation obstacle light.

6. The distribution device according to any one of Claims 1 to 5, wherein the position information of the obstacle includes position information in a plurality of distribution devices arranged on the obstacle.

7. An aircraft comprising:
reception means for wirelessly receiving obstacle information including position information of an obstacle and identification information of the obstacle from a distribution device of the obstacle;
interpretation means for interpreting a three-dimensional structure of the obstacle, based on the received obstacle information; and
determination means for determining a flight route avoiding the obstacle, based on the interpreted three-dimensional structure of the obstacle.

8. The aircraft according to Claim 7, wherein the distribution device is an aviation obstacle light installed on the obstacle.

9. A flight system comprising:
a distribution device; and
an aircraft, wherein
the distribution device includes:
acquisition means for acquiring position information of an obstacle; and
distribution means for wirelessly distributing, from the obstacle to an aircraft, obstacle information including the acquired position information of the obstacle and identification information of the obstacle, and
the aircraft includes:
reception means for wirelessly receiving the obstacle information from the distribution device of the obstacle;
interpretation means for interpreting a three-dimensional structure of the obstacle, based on the received obstacle information; and
determination means for determining a flight route avoiding the obstacle, based on the interpreted three-dimensional structure of the obstacle.

10. The flight system according to Claim 9, wherein the distribution device is an aviation obstacle light installed on the obstacle.

11. A distribution method comprising:
acquiring position information of an obstacle; and
wirelessly distributing, from the obstacle to an aircraft, obstacle information including the acquired position information of the obstacle and identification information of the obstacle.

12. The distribution method according to Claim 11, wherein the distribution is performed from an aviation obstacle light installed on the obstacle.

13. A flight route determination method comprising:
wirelessly receiving obstacle information including position information of an obstacle and identification information of the obstacle from a distribution device of the obstacle;
interpreting a three-dimensional structure of the obstacle, based on the received obstacle information; and
determining a flight route avoiding the obstacle, based on the interpreted three-dimensional structure of the obstacle.

14. The flight route determination method according to Claim 13, wherein the distribution device is an aviation obstacle light installed on the obstacle.

15. A non-transitory computer-readable medium storing a distribution program for causing a computer to execute processing of:
acquiring position information of an obstacle; and
wirelessly distributing, from the obstacle to an aircraft, obstacle information including the acquired position information of the obstacle and identification information of the obstacle.

16. The non-transitory computer-readable medium according to Claim 15, wherein the distribution is performed from an aviation obstacle light installed on the obstacle.

17. A non-transitory computer-readable medium storing a flight route determination program for causing a computer to execute processing of:
wirelessly receiving obstacle information including position information of an obstacle and identification information of the obstacle from a distribution device of the obstacle;
interpreting a three-dimensional structure of the obstacle, based on the received obstacle information; and
determining a flight route avoiding the obstacle, based on the interpreted three-dimensional structure of the obstacle.

18. The non-transitory computer-readable medium according to Claim 17, wherein the distribution device is an aviation obstacle light installed on the obstacle.
